# EUROPÄISCHE PATENTSCHRIFT

(11) **EP 2 581 331 B1**
(45) Veröffentlichungstag und Bekanntmachung des Hinweises auf die Patenterteilung: **10.12.2014**
(21) Anmeldenummer: 12007132.9
(22) Anmeldetag: 15.10.2012
(51) Int. Cl.: B65G 47/22, B65G 47/26, B65G 47/88

(54) **Vorrichtung und Verfahren zum Ausrichten von Produkten**
Device and method for aligning products
Dispositif et procédé d'alignement de produits

(30) Priorität: 14.10.2011 DE 102011116145
(43) Veröffentlichungstag der Anmeldung: 17.04.2013
(73) Patentinhaber: Weber Maschinenbau GmbH Breidenbach, 35236 Breidenbach (DE)
(72) Erfinder: Bauer, Sigfrid, 17091 Groß Teetzleben (DE)
(74) Vertreter: Grünecker, Kinkeldey, Stockmair & Schwanhäusser

(56) Entgegenhaltungen:
- WO-A1-88/07969
- DE-A1- 2 552 995
- US-A1- 2006 054 463
- US-B1- 6 845 860

## Beschreibung

Die vorliegende Erfindung bezieht sich auf eine Vorrichtung und ein Verfahren zum Ausrichten von mehreren Produkten, insbesondere Lebensmittelprodukten.

Im Stand der Technik ist es bekannt, dass mehrere Lebensmittelprodukte, beispielsweise Lebensmittelstangen, parallel durch einen Anschlag ausgerichtet werden, bevor sie durch eine Schneidvorrichtung, beispielsweise einen Slicer, aufgeschnitten werden.

Weiterhin ist es im Stand der Technik bekannt, Lebensmittelprodukte auf separat angetriebenen Spuren zu fördern, und eine Ausrichtung der Lebensmittelprodukte durch Anpassung der jeweiligen Transportgeschwindigkeiten zu erreichen. Dies hat allerdings den Nachteil, dass für jede Spur ein separat gesteuerter Servoantrieb verbaut werden muss, was hohe Kosten verursacht. Weiterhin ist ein solches System gemeinhin unflexibel, da die Spurbreite der einzelnen Spuren nicht angepasst werden kann.

In der gattungsgemässen US 2006/054463 A1 wird eine Förderbandanordnung beschrieben, bei der zufällig auf einem ersten breiten Förderband verteilte Produkte am Ende dieses ersten Förderbands von Hebevorrichtungen so angehoben werden können, dass sie sich über dem Förderband befinden und damit von diesem nicht mehr bewegt werden. Werden die Produkte wieder abgesetzt, gelangen sie von dem Ende des ersten Förderbands auf ein anschließendes zweites kurzes Förderband mit einer höheren Fördergeschwindigkeit. Dieses zweite Förderband führt die Produkte zu einem quer zu dem ersten und zweiten Förderband gelegenen dritten Förderband. Ein Absetzen der Produkte durch die Hebevorrichtungen erfolgt zu Zeitpunkten, die so ausgelegt sind, dass die Produkte aufgrund ihres Ankunftszeitpunkts am dritten Förderband auf diesem äquidistant angeordnet sind. Jede der Hebevorrichtungen hat einen separaten Betätigungsteil, der hydraulisch, elektrisch oder pneumatisch betätigt wird, um die Hebevorrichtung zu heben oder zu senken.

Bei der in der WO 88/07969 A1 offenbarten Fördervorrichtung können Hebearme mittels einer Hydraulikvorrichtung und einer Vielzahl von Elektromagneten, von denen jeweils einer einem Hebearm zugeordnet ist, zwischen einer Position, in der sie sich unter einem Förderband befinden, und einer Position, in der sie mit einem Hebebereich über das Förderband hinausragen, bewegt werden und so auf dem Förderband befindliche Gegenstände angehoben oder abgesetzt werden.

Die Aufgabe der Erfindung ist es, eine Vorrichtung und ein Verfahren bereitzustellen, um eine flexible und vorteilhafte Möglichkeit der Ausrichtung von mehreren Produkten, insbesondere Lebensmittelprodukten, zu ermöglichen.

Diese Aufgabe wird durch eine Vorrichtung zum Ausrichten von mehreren Produkten gemäß Anspruch 1 bzw. durch ein Verfahren zum Ausrichten von mehreren Produkten nach Anspruch 7 gelöst.

Vorteilhafte Ausführungsformen sind in den Unteransprüchen angegeben.

Das Hebemittel kann insbesondere ausgelegt sein, mehrere nebeneinander angeordnete einzelne Produkte nacheinander anzuheben oder abzusenken, so dass durch Verschieben wenigstens eines Produktes im abgesenkten Zustand durch den Produktförderer, die Produkte ausgerichtet werden können. Vorteilhafterweise können alle nebeneinander an-geordneten Produkte ausgerichtet werden. Insbesondere kann das Hebemittel ausgelegt sein, alle nebeneinander angeordneten Produkte nacheinander einzeln anzuheben oder abzusenken, um die Produkte auszurichten.

Somit kann mit nur einem Produktförderer durch das erfindungsgemäße Hebemittel, eine flexible und kostengünstige Ausrichtung von mehreren Produkten erfolgen. Der Produktförderer ist ausgelegt, die Produkte in Längsrichtung zu fördern. Auf dem Produktförderer sind in Breitenrichtung wenigstens zwei Produkte nebeneinander anordenbar, in vorteilhaften Ausführungsformen sind zwei, drei, vier, fünf, sechs oder mehr Produkte auf dem Produktförderer in Breitenrichtung nebeneinander anordenbar.

Der Produktförderer ist insbesondere als Transportband mit Förderriemen, insbesondere Rundriemen, ausgebildet.

Die Lebensmittelprodukte sind insbesondere Wurst-, Käse- oder Schinkenstangen, die, nachdem sie ausgerichtet wurden, aufgeschnitten werden. Weiterhin können die Lebensmittelprodukte auch bereits aufgeschnittene Lebensmittelprodukte sein, beispielsweise Stapel von Scheiben von Käse, Schinken und/oder Wurst.

In einem Ausführungsbeispiel ist ein Positionssensor vorgesehen, der ausgelegt ist, die Positionen der Produkte in Längsrichtung zu bestimmen. Der Positionssensor kann insbesondere eine optische Sensorik sein, die den Versatz zwischen den mehreren in Breitenrichtung nebeneinander angeordneten Produkten in Längsrichtung erfasst. Nachdem die Position der Produkte in Längsrichtung bestimmt wurde, kann die Vorrichtung durch geeignete Ansteuerung des Produktförderers und des Hebemittels ohne weitere sensorische Erfassung eine Ausrichtung der Produkte vornehmen, da der relative Versatz zwischen den Produkten jeweils bereits bestimmt ist.

Insbesondere ist der Positionssensor eine Lichtschranke. Vorteilhafterweise ist die Lichtschranke so angeordnet, dass die Produkte durch den Produktförderer oder einen vorangeordneten Produktförderer durch die Lichtschranke gefördert werden, wobei der zeitliche Abstand bestimmt werden kann, in dem die einzelnen Produkte die Lichtschranke durchqueren. In Abhängigkeit der Fördergeschwindigkeit des Produktförderers kann somit der relative Versatz zwischen den Produkten in Längsrichtung bestimmt werden.

In einer Ausführungsform besteht der Produktförderer aus mehreren parallelen Förderriemen, die synchron angetrieben werden, wobei das Hebemittel ausgelegt ist, im angehobenen Zustand durch die Zwischenräume zwischen den Förderriemen von unten durchzugreifen. Insbesondere erstrecken sich die Förderriemen in Längsrichtung. Die Förderriemen sind insbesondere Rundriemen, wobei es aber auch möglich ist, Ketten als Förderriemen einzusetzen. Dadurch, dass das Hebemittel von unten durch die Zwischenräume zwischen den Förderriemen die Produkte anheben kann, wird eine schonende und einfache Anhebung der einzelnen Produkte ermöglicht.

Vorteilhafterweise ist jeweils zwischen zwei Förderriemen des Produktförderers ein Hebesegment des Hebemittels angeordnet. Das Hebemittel umfasst somit eine Vielzahl von Hebesegmenten, die jeweils eine Breite aufweisen, dass sie zwischen zwei Förderriemen des Produktförderers durchgreifen können.

In einer Ausführungsform weist das Hebemittel eine Vielzahl von unabhängig voneinander beweglichen Hebesegmenten auf, die sich jeweils in Förderrichtung des Produktförderers erstrecken, und die nebeneinander in Breitenrichtung des Produktförderers angeordnet sind, wobei jeweils mehrere der Hebesegmente ausgelegt sind, im angehobenen Zustand gleichzeitig mit nur einem Produkt in Eingriff zu sein. Dadurch, dass die Hebesegmente unabhängig voneinander beweglich sind, und mehrere der Hebesegmente im angehobenen Zustand gleichzeitig mit nur einem Produkt in Eingriff sein können, können Produkte von beliebiger Breite durch das Hebemittel angehoben werden, ohne dass eine Anpassung der Vorrichtung erfolgen muss. Je nach Produktbreite sind jeweils eine unterschiedliche Anzahl an Hebesegmenten dem jeweiligen Produkt zugeordnet.

Wenn die mehreren Hebesegmente, die mit einem Produkt in Eingriff gelangen, sequentiell angehoben werden, ist es vorteilhaft, den Produktförderer anzuhalten, da ansonsten ein Schiefstellen der nur teilweise in Breitenrichtung angehobenen Produkte stattfinden könnte.

In einer Ausführungsform ist ein Ansteuerungsmechanismus vorgesehen, der ausgelegt ist, die Hebesegmente so mechanisch anzusteuern, dass sie zunächst zeitgleich angehoben, und dann der Reihe nach in Breitenrichtung abgesenkt werden. Der Produktförderer kann während des zeitgleichen Anhebens weiterlaufen, da dabei keine Gefahr des Schiefstellens der Produkte vorliegt. Allerdings ist es vorteilhaft, beim Absenken der Hebesegmente den Produktförderer zeitweise anzuhalten. Jeweils bevor ein weiteres Produkt durch die ihm zugeordneten Hebesegmente abgesenkt wird, wird das wenigstens eine auf dem Produktförderer vorliegende Produkt so verfahren, dass es in der gewünschten Ausrichtung mit dem jeweils nachfolgend abgesenkten Produkt ist.

In einer anderen Ausführungsform ist ein Ansteuerungsmechanismus vorgesehen, der ausgelegt ist, die Hebesegmente so mechanisch anzusteuern, dass sie zunächst der Reihe nach in Breitenrichtung angehoben, und dann zeitgleich abgesenkt werden. In diesem Fall, findet ein Ausrichten der Hebesegmente während des Anhebevorgangs statt. Insbesondere, wird das jeweilige als nächstes anzuhebende Produkt mit dem bereits angehobenen wenigstens einen Produkt in gewünschter Art ausgerichtet, bevor es angehoben wird. Im angehobenen Zustand sind dann alle Produkte bereits ausgerichtet, wobei sie dann zeitgleich abgesenkt werden können.

In einer weiteren Ausführungsform ist ein Ansteuerungsmechanismus vorgesehen, der ausgelegt ist, die Hebesegmente so mechanisch anzusteuern, dass sie zunächst der Reihe nach in Breitenrichtung angehoben, und dann der Reihe nach in Breitenrichtung abgesenkt werden. Hier kann eine Ausrichtung sowohl während des Anhebevorgangs, als auch während des Absenkvorgangs erfolgen.

Der Ansteuerungsmechanismus umfasst insbesondere einen Nockentrieb, der für jedes Hebesegment ein eigenes Nockenprofil bereitstellt. Insbesondere können die Nockenprofile so angeordnet sein, dass ein sequentielles Anheben und/oder Absenken der Hebesegmente in Breitenrichtung erfolgt. Der Nockentrieb ermöglicht insbesondere, dass eine Vielzahl von Hebesegmenten mit nur einem Antriebsmittel, insbesondere einem Servomotor, betrieben werden können, wodurch eine kostengünstige Ansteuerung der Hebesegmente ermöglicht wird.

In einer Ausführungsform ist ein Ansteuerungsmechanismus vorgesehen, der ausgelegt ist, mehrere Hebeelemente des Hebemittels so mechanisch anzusteuern, dass sie gemeinsam angehoben, aber nacheinander abgesenkt werden. Somit kann jeweils durch Verfahren des Produktförderers während des sequentiellen Absenkens der Hebeelemente ein Ausrichten der Produkte erreicht werden.

In einer anderen Ausführungsform ist ein Ansteuerungsmechanismus vorgesehen, der ausgelegt ist, mehrere Hebeelemente des Hebemittels so mechanisch anzusteuern, dass sie nacheinander angehoben werden, und dann nacheinander abgesenkt werden. Insbesondere können zunächst alle Hebeelemente angehoben werden, und dann alle Hebeelemente abgesenkt werden. Somit kann ein Ausrichten der Produkte sowohl während des Anhebevorgangs, als auch während des Absenkvorgangs ermöglicht werden.

In einer weiteren anderen Ausführungsform ist ein Ansteuerungsmechanismus vorgesehen, der ausgelegt ist, mehrere Hebeelemente des Hebemittels so mechanisch anzusteuern, dass sie nacheinander angehoben werden, aber gemeinsam abgesenkt werden. Somit kann ein Ausrichten der Produkte vornehmlich während des Anhebevorgangs erfolgen.

In einer weiteren anderen Ausführungsform ist ein Ansteuerungsmechanismus vorgesehen, der ausgelegt ist, mehrere Hebeelemente des Hebemittels so mechanisch anzusteuern, dass sie jeweils einzeln angehoben und abgesenkt werden. Somit kann jeweils wenn ein Produkt durch das Hebeelement einzeln angehoben wurde, durch ein Verfahren der verbleibenden Produkte auf den Produktförderer, das eine angehobene Produkt mit wenigstens einem auf dem Produktförderer verbleibenden Produkt ausgerichtet werden. Wenn dies sequentiell für mehrere Produkte durchgeführt wird, können mehrere oder alle Produkte miteinander ausgerichtet werden.

Vorteilhafterweise umfasst jedes Hebeelement jeweils mehrere Hebesegmente, die ausgelegt sind, synchron angehoben und abgesenkt zu werden, wobei die Hebeelemente ausgelegt sind, dass ein Produkt jeweils nur mit einem Hebeelement in Eingriff kommt. Insbesondere umfasst das Hebemittel mehrere Hebeelemente. Dadurch, dass die mehreren Hebesegmente synchron angehoben und abgesenkt werden können, kann der Produktförderer während des Anhebe- oder Absenkvorgangs weiterlaufen, ohne dass ein Schiefstellen der Produkte erfolgt. Dadurch kann der Ausrichtvorgang insgesamt beschleunigt werden.

Erfindungsgemäß umfasst der Ansteuerungsmechanismus eine Exzenterwelle, auf der die Hebeelemente angeordnet sind. Dabei liegt jeweils ein unterschiedliches Exzenterelement pro Hebeelement auf der Exzenterwelle vor, wobei die Exzenterelemente so angeordnet sind, dass die Hebeelemente sequentiell angehoben werden können. Alternativ kann ein Ansteuerungsmechanismus mit einer Exzenterwelle pro Hebeelement vorgesehen sein, so dass die Hebeelemente unabhängig voneinander gesteuert werden können.

In einer Ausführungsform umfasst der Ansteuerungsmechanismus einen Nockentrieb, wobei jeweils ein Nockenprofil pro Hebeelement bereitgestellt wird, mit dem alle Hebesegmente eines Hebeelementes in Eingriff sind, so dass ihre Bewegung synchronisiert ist. Das Nockenprofil kann als durchgängiges Nockenprofil oder als abgesetztes Nockenprofil mit einzelnen gruppenweise gleich ausgebildeten Nockenprofilen pro Hebesegment ausgebildet sein.

In einer Ausführungsform sind die Hebesegmente eines Hebeelements miteinander verbunden, so dass ihre Bewegung synchronisiert ist. Somit muss nur ein Hebesegment pro Hebeelement durch den Ansteuerungsmechanismus angetrieben werden, während die weiteren Hebesegmente des Hebeelements durch die Verbindung mitbewegt werden. Dies kann die Ausgestaltung des Ansteuerungsmechanismus vereinfachen.

In einer Ausführungsform weist der Ansteuerungsmechanismus nur einen Stellantrieb, insbesondere einen Servomotor oder Schrittmotor, auf. Dies wird durch die vorteilhafte Ausgestaltung des Ansteuerungsmechanismus ermöglicht, so dass insgesamt ein kostengünstig und verlässlich anzusteuerndes Hebemittel bereitgestellt werden kann.

In einer anderen Ausführungsform kann das Hebemittel einen Greifer umfassen, der über dem Produktförderer angeordnet ist. Der Greifer kann wie bereits für das Hebemittel in anderen Ausführungsformen beschrieben, die grundsätzlich gleichen Anhebevorgänge durchführen, insbesondere können zunächst mehrere Produkte gleichzeitig angehoben werden, und dann sequentiell abgesenkt werden, oder mehrere Produkte sequentiell angehoben werden, und dann zusammen abgesenkt werden. Weiterhin können Produkte einzeln angehoben werden, oder mehrere Produkte zunächst sequentiell angehoben werden und dann sequentiell abgesenkt werden.

Die Aufgabe wird weiterhin gelöst durch ein Verfahren zum Ausrichten von mehreren Produkten, insbesondere Lebensmittelprodukten, mit den folgenden Schritten: zunächst werden mehrere Produkte in Breitenrichtung eines Produktförderers angeordnet. Dann werden die mehreren Produkte in Längsrichtung des Produktförderers gefördert. In Folge wird wenigstens ein Produkt durch ein Hebemittel angehoben, so dass es nicht mehr im Eingriff mit dem Produktförderer ist. Wenigstens ein verbleibendes Produkt auf dem Produktförderer wird daraufhin in Längsrichtung oder Gegenlängsrichtung gefördert, so dass es mit einem angehobenen Produkt ausgerichtet wird. Schließlich wird das wenigstens eine angehobene Produkt abgesenkt. Das Anheben ermöglicht somit eine relative Bewegung zwischen wenigstens einem Produkt auf dem Produktförderer und wenigstens einem durch das Hebemittel angehobenen Produkt, so dass die Produkte in Längsrichtung relativ zueinander bewegt werden können, und somit in Längsrichtung ausgerichtet werden können.

Insbesondere kann die Position der Produkte in Längsrichtung während des Anordnens der mehreren Produkte auf dem Produktförderer oder während des Förderns der mehreren Produkte auf den Produktförderer bestimmt werden, und als Grundlage für die Ausrichtung verwendet werden. Sobald die relative Anordnung der Produkte in Längsrichtung bekannt ist, und die gewünschte relative Anordnung bestimmt wurde, kann durch das Anheben wenigstens eines Produktes und durch das Verschieben der nicht angehobenen Produkte in mehreren Abfolgen die gewünschte relative Ausrichtung erreicht werden.

In einer Ausführungsform des Verfahrens kann die Position in Längsrichtung des wenigstens eines verbleibenden Produktes, das auf dem Produktförderer gefördert wird, bestimmt werden. Somit kann jeweils immer das wenigstens eine auf dem Produktförderer verbleibende Produkte in die gewünschte Position gefördert werden, bevor das wenigstens eine angehobene Produkt wieder auf den Produktförderer abgesenkt wird.

Insbesondere können mehrere Produkte durch das Hebemittel gleichzeitig angehoben werden, so dass sie nicht mehr im Eingriff mit dem Produktförderer sind, wobei wiederholt das wenigstens eine verbleibende Produkt auf dem Produktförderer gefördert wird, bis es mit einem angehobenen Produkt ausgerichtet ist, und dann jeweils das angehobene Produkt abgesenkt wird. Somit werden zunächst mehrere, insbesondere alle, Produkte gleichzeitig angehoben, und dann werden die Produkte sequentiell ausgerichtet und abgesenkt.

In einer anderen Ausführungsform des Verfahrens, wird wiederholt jeweils ein Produkt angehoben und dann wenigstens ein verbleibendes Produkt auf dem Produktförderer gefördert und ausgerichtet, bis die Produkte ausgerichtet sind. Somit werden die Produkte nacheinander angehoben, und nach jedem Anhebevorgang wird jeweils wenigstens ein Produkt auf den Produktförderer mit dem angehobenen Produkt ausgerichtet. Schließlich werden alle angehobenen, ausgerichteten Produkte abgesenkt.

Somit findet ein sequentielles Anheben der ausgerichteten Produkte statt, bis die ausgerichteten Produkte insgesamt wieder abgesenkt werden.

In einer weiteren Ausführungsform des Verfahrens wird wiederholt wenigstens ein Produkt durch ein Hebemittel angehoben, so dass es nicht mehr im Eingriff mit dem Produktförderer ist, und dann wiederholt wenigstens ein verbleibendes Produkt auf dem Produktförderer gefördert, so dass es mit dem angehobenen Produkt ausgerichtet wird, und jeweils ein Produkt abgesenkt. Somit werden zunächst mehrere Produkte nacheinander angehoben, und dann jeweils eines der angehobenen Produkte mit einem Produkt auf dem Produktförderer ausgerichtet, bevor das angehobene Produkt wieder abgesenkt wird, wobei Ausrichten und Absenken wiederholt werden.

In einer weiteren Ausführungsform des Verfahrens wird jeweils ein Produkt durch das Hebemittel angehoben, so dass es nicht mehr in Eingriff mit dem Produktförderer ist, dann wenigstens das eine verbleibende Produkt auf dem Produktförderer gefördert, so dass es mit dem angehobenen Produkt ausgerichtet ist, und dann das angehobene Produkt abgesenkt, wobei die Schritte Anheben, Fördern zum Ausrichten und Absenken so lange wiederholt werden, bis alle Produkte ausgerichtet sind.

In manchen Ausführungsformen fördert der Produktförderer während des Anhebens wenigstens eines Produktes durch das Hebemittel oder während des Absenkens des wenigstens einen angehobenen Produktes die auf ihm liegenden beziehungsweise verbleibenden Produkte. Dafür ist es oftmals wichtig, dass die Produkte gleichmäßig angehoben werden, da es ansonsten zu einem Schiefstellen der Produkte kommen könnte.

Die Erfindung wird nun weitergehend anhand von bevorzugten Ausführungsbeispielen erläutert.
- Figur 1: zeigt eine erste Ausführungsform der erfindungsgemäßen Vorrichtung in Seitenansicht.
- Figuren 2a bis e: zeigen die Funktion der ersten Ausführungsform der erfindungsgemäßen Vorrichtung in einer Ansicht von schräg oben.
- Figuren 3a bis f: zeigen die Funktion einer zweiten Ausführungsform der erfindungsgemäßen Vorrichtung in einer Seitenansicht.
- Figur 4: zeigt eine dritte Ausführungsform der erfindungsgemäßen Vorrichtung in einer Seitenansicht.
- Figur 5: zeigt eine vierte Ausführungsform der erfindungsgemäßen Vorrichtung in einer Seitenansicht.

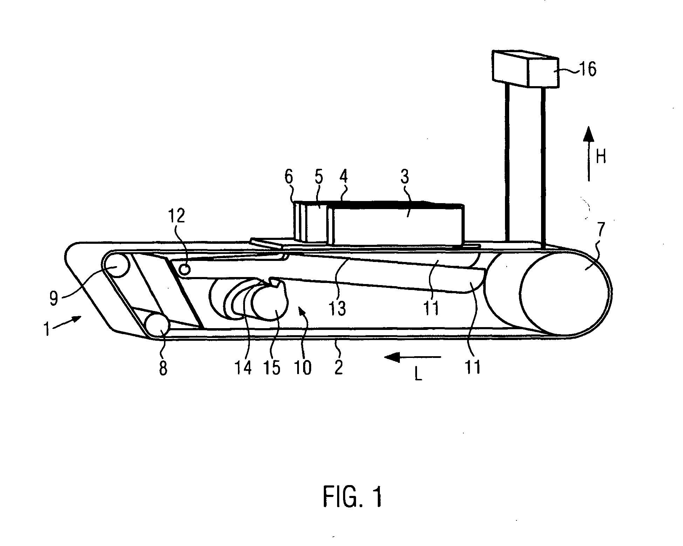

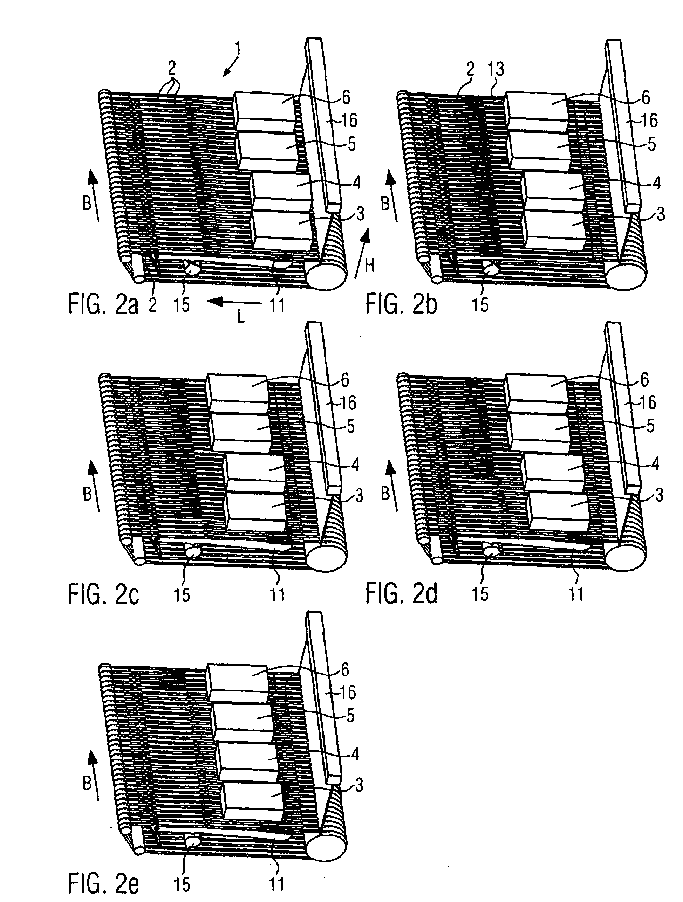

In Figur 1 ist eine erste Ausführungsform der erfindungsgemäßen Vorrichtung dargestellt. Die Vorrichtung weist einen Produktförderer 1 auf, mit einer Vielzahl an Förderriemen 2, die jeweils parallel zueinander angeordnet sind, und Produkte 3, 4, 5, 6 in einer Längsrichtung L fördern (siehe auch Figuren 2a bis e).

Die Produkte 3, 4, 5, 6 sind insbesondere Lebensmittelprodukte, wie z.B. Lebensmittelstangen. Lebensmittelstangen sind Lebensmittel mit länglicher Ausprägung, die gewöhnlicherweise aufgeschnitten werden. Insbesondere sind die Lebensmittelstangen Wurst-, Käse- oder Schinkenstangen. Alternativ können aber auch beliebige andere Lebensmittelprodukte zueinander ausgerichtet werden, so z.B. verschiedene Portionen von Lebensmitteln, beispielsweise Portionen von aufgeschnittenen Lebensmittelscheiben.

Die Produkte 3, 4, 5, 6 sind anfänglich nebeneinander in Breitenrichtung B (siehe Figur 2a) auf dem Produktförderer 1 angeordnet. Insbesondere sind die Produkte 3, 4, 5, 6 auf den Förderriemen 2 angeordnet, wobei jeweils mehrere Förderriemen 2 in Kontakt mit einem Produkt 3, 4, 5, 6 sind. Die Produkte 3, 4, 5, 6 weisen insbesondere eine längere Erstreckung in Längsrichtung L auf, als in den dazu orthogonalen Richtungen, und erstrecken sich somit vornehmlich in Richtung der Förderriemen 2. Die Förderriemen 2 sind jeweils parallel über gemeinsame Umlenkrollen, im vorliegenden Ausführungsbeispiel über drei gemeinsame Umlenkrollen 7, 8, 9, geführt. Wenigstens eine der Umlenkrollen 7, 8, 9 ist antreibbar, um die Förderung der Produkte auf den Produktförderer 1 zu ermöglichen.

Unter dem oberen Trum der Förderriemen 2 ist das Hebemittel 10 angeordnet. Das Hebemittel 10 umfasst eine Vielzahl von Hebesegmenten 11, die sich vornehmlich in Längsrichtung L erstrecken, und nebeneinander in Breitenrichtung B mit einer gewissen Beabstandung angeordnet sind. Die Hebesegmente 11 sind schwenkbar an einer Lagerachse 12 nahe einem ihrer Enden angeordnet. An ihrer oberen Seite weisen die Hebesegmente 11 einen vorstehenden, vornehmlich geraden Bereich 13 auf, um eine definierte Auflagefläche für die Produkte 3, 4, 5, 6 bereitzustellen. An ihrer Unterseite, in Beabstandung zur Lagerachse 12 weisen die Hebesegmente einen Vorsprung 14 auf, der im Eingriff mit einer Nockenwelle 15 ist. Die Nockenwelle 15 stellt insbesondere für jedes Hebesegment 11, das heißt für jeden Vorsprung 14, ein unterschiedliches Nockenprofil bereit. Insbesondere sind die Lagerachse 12, die Nockenwelle 15 und der Vorsprung 14, und der vorstehende Bereich 13 der Hebesegmente 11 sequentiell in Längsrichtung L angeordnet. Die Nockenwelle 15 ist insbesondere unter den Hebesegmenten 11 angeordnet. Die Nockenwelle 15 wird mit einem steuerbaren Antriebsmittel, insbesondere einem Servomotor oder Schrittmotor, angetrieben.

Im Eingangsbereich des Produktförderer 1 ist eine Lichtschranke 16 vorgesehen, die jeweils den Durchtritt der einzelnen Produkte 3, 4, 5, 6 bestimmen kann, und somit aus dem Zeitpunkt der Durchtritte der Produkte 3, 4, 5, 6 und der Fördergeschwindigkeit des Produktförderers 1 die relative Anordnung der Produkte bestimmen kann.

Im Folgenden wird die Funktion der ersten Ausführungsform der erfindungsgemäßen Vorrichtung anhand von Figuren 2a bis e beschrieben.

In Figur 2a ist der anfängliche Zustand der unausgerichteten Produkte 3, 4, 5, 6 auf dem Produktförderer 1 dargestellt. Die Produkte 3, 4, 5, 6 haben gerade die Lichtschranke 16 durchquert, so dass ihre relative Position in Längsrichtung L bestimmt werden konnte. Sämtliche Hebesegmente 11 sind in einem abgesenkten Zustand, das heißt, vollständig unter der Förderfläche angeordnet, die durch die Förderriemen 2 für die Produkte 3, 4, 5, 6 bereitgestellt wird. Die Produkte 3, 4, 5, 6 werden nun über die Hebesegmente 11 bewegt, insbesondere den vorstehenden Bereich 13 der Hebesegmente 11. Dann wird die Nockenwelle 15 so verdreht, dass sämtliche Hebesegmente 11 zeitgleich in Höhenrichtung H nach oben angehoben werden, so dass der Zustand wie in Figur 2b dargestellt, vorliegt. Insbesondere sind nun alle Produkte 3, 4, 5, 6 in unausgerichtetem Zustand auf den Hebesegmenten 11, insbesondere auf dem vorstehenden Bereich 13 der Hebesegmente 11, angeordnet. Insbesondere kann das Anheben der Hebesegmente 11 ausgeführt werden, wenn der Förderriemen 9 die Produkte fördert, da durch das gleichzeitige Anheben der Hebesegmente 11 kein Schiefstellen der Produkte 3, 4, 5, 6 erfolgt.

Nachdem alle Produkte 3, 4, 5, 6 angehoben wurden, wird nun wie in Figur 2c dargestellt, die Nockenwelle 15 weiter verdreht, so dass die Hebesegmente 11 der Reihe nach in Breitenrichtung B abgesenkt werden, bis das Produkt 3 wieder auf dem Produktförderer 1 zum Liegen kommt. Es wird darauf hingewiesen, dass es in anderen Ausführungsbeispielen, auch möglich ist, eines der Produkte anfänglich gar nicht anzuheben.

Das abgesenkte Produkt 3 wird daraufhin durch Antrieb des Fördermittels entgegen der Längsrichtung L mit dem noch angehobenen Produkt 4 ausgerichtet.

Die ausgerichteten Produkte 3, 4 können in Figur 2d gesehen werden, wobei hier die Nockenwelle 15 bereits weitergedreht wurde, so dass das Produkt 4 bereits halb auf dem Fördermittel 1 aufliegt. Die Nockenwelle 15 wird nun weitergedreht, bis das Produkt 4 vollständig auf dem Fördermittel 1 aufliegt, so dass die miteinander ausgerichteten Produkte 3, 4 zusammen mit dem Fördermittel 1 verschoben werden können, während die noch angehobenen Produkte 5, 6 stationär auf dem Hebemittel verbleiben. Wenn die Produkte 3, 4 mit dem Produkt 5 ausgerichtet wurden, wird durch Weiterdrehen der Nockenwelle 15 auch das Produkt 5 abgesenkt, so dass die Produkte 3, 4, 5 zueinander ausgerichtet auf dem Fördermittel 1 aufliegen, wie in Figur 2e dargestellt. Schließlich werden die Produkte 3, 4, 5 mit dem Produkt 6, das sich noch auf dem Hebemittel 10 in angehobenem Zustand befindet, durch Verfahren des Fördermittels ausgerichtet, bevor wie in Figur 2e gezeigt, die Nockenwelle weitergedreht wird, so dass das Produkt 6 abgesenkt wird.

In den Figuren 2c, 2d und 2e ist jeweils eines der Produkte 3, 4, 6 im halbabgesenkten Zustand dargestellt, das heißt, manche der dem Produkt zugeordneten Hebesegmente 11 sind bereits abgesenkt, während andere der diesem Produkt zugeordneten Hebesegmente 11 noch im angehobenen Zustand sind. In diesem halbabgesenkten Zustand ist ein Verfahren des Produktförderers 1 nicht anzuraten, da dann ein ungewolltes Schiefstellen der Produkte erfolgen könnte. Vielmehr wird das Verfahren des Produktförderers 1 bevorzugterweise nur dann durchgeführt, wenn die Produkte entweder vollständig im angehobenen oder vollständig im abgesenkten Zustand sind. Eine Ausnahme bildet das zeitgleiche Anheben sämtlicher Hebesegmente 11 wie im Übergang von Figur 2a auf Figur 2b dargestellt, da dabei ein gleichmäßiges Anheben der Produkte 3, 4, 5, 6 erfolgt, so dass ein Schiefstellen verhindert werden kann.

Die Erfindung ermöglicht vorteilhafterweise, dass insgesamt jeweils nur ein steuerbarer Antrieb für den Produktförderer 1 und ein steuerbarer Antrieb für das Hebemittel 10 vorgesehen werden müssen, wodurch ein einfach und kostengünstig herzustellendes System, das zudem wartungsarm ist, bereitgestellt werden kann.

Zusammenfassend werden beliebig versetzt liegende Produkte, die nebeneinander auf einem Produktförderer 1 angeordnet sind, gleichzeitig über die Transportebene der Förderriemen 2 angehoben, und dann nacheinander abgesenkt, wobei vor dem Absenken jeweils ein Ausrichten der einzelnen Produkte zu jeweils benachbarten Produkten, die auf den Förderriemen 2 aufliegen, erfolgt, bis alle Produkte relativ zueinander ausgerichtet sind. Die Anzahl der nebeneinander liegenden Produkte ist dabei nicht relevant. Insbesondere ist auch die Produktbreite der einzelnen Produkte nicht relevant, da eine Vielzahl von Hebesegmenten 11 bereitgestellt wird, und jeweils nur die Ansteuerung der Nockenwelle 15 angepasst werden muss, damit entsprechend weniger oder mehr Hebesegmente nacheinander abgesenkt werden, bevor eine weitere Ausrichtung stattfindet. Somit ist beim Wechsel zwischen verschiedenen Produktbreiten lediglich eine Anpassung der Steuereinstellungen des Antriebs der Nockenwelle 15 notwendig, aber keine mechanische Anpassung oder eine Umrüstung der Vorrichtung.

In einem ersten Schritt gemäß einer ersten Ausführungsform des erfindungsgemäßen Verfahrens wie in Figuren 2a bis 2e dargestellt, werden Produkte 3, 4, 5, 6 mit relativem Versatz in Förderrichtung, das heißt Längsrichtung L, von einem davorgeschalteten Fördermittel, insbesondere in Form eines Transportbandes, auf den Produktförderer 1 übergeben. Der Versatz wird insbesondere durch optische Sensorik, wie z.B. die Lichtschranke 16, erfasst. Sobald sich die Produkte 3, 4, 5, 6 vollständig über den Hebesegmenten 11 befinden, wird die entsprechend gestaltete Nockenwelle 15 so gesteuert, dass die komplette Produktzeile, das heißt alle Produkte 3, 4, 5, 6 in Breitenrichtung, angehoben wird.

Dann wird der Produktförderer 1, nämlich insbesondere die Förderriemen 2, gestoppt. Die Nockenwelle 15 dreht sich weiter, bis nacheinander genau so viele Hebesegmente 11 abgesenkt wurden, dass die außenliegende Portion 3 komplett auf dem Produktförderer 1 aufliegt. Das auf dem Produktförderer 1 abgelegte Produkt 3 wird nun durch die Bewegung der Förderriemen 2 des Produktförderers 1 je nach entsprechend erfasstem Versatz zum benachbarten Produkt 4 ausgerichtet.

Als Nächstes wird durch Weiterdrehen der Nockenwelle 15 das Produkt 4 auf den Förderriemen 2 abgelegt und die Produkte 3, 4 werden zum Produkt 5 ausgerichtet. Dieser Vorgang wird so lange fortgeführt, bis alle Produkte 3, 4, 5, 6 zueinander ausgerichtet sind. Danach kann sofort die nächste Produktzeile auf den Produktförderer 1 übernommen werden. Der Produktförderer 1 kann insbesondere in Form eines Ausrichtbandes gestaltet sein.

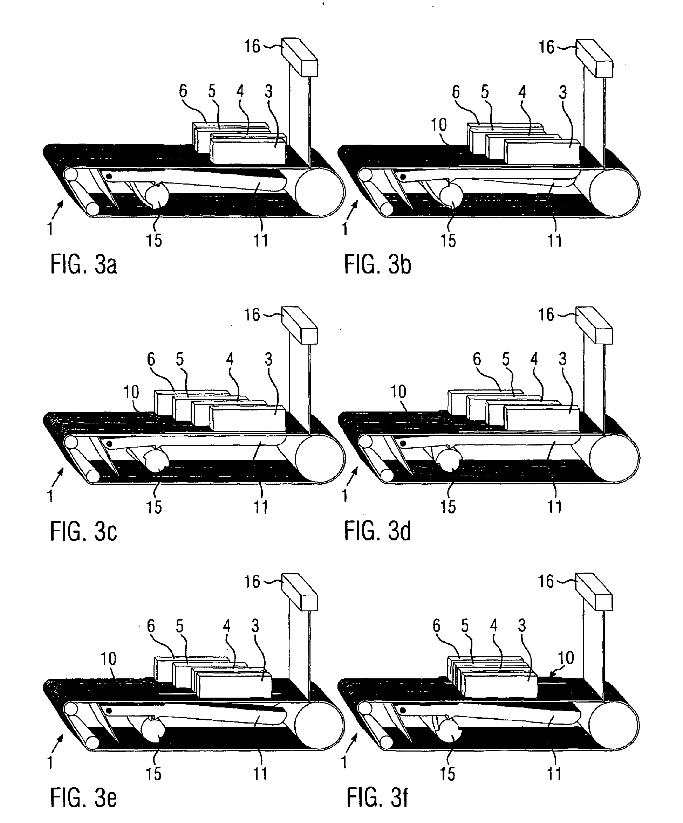

In den Figuren 3a bis 3f ist eine zweite Ausführungsform der erfindungsgemäßen Vorrichtung dargestellt. Diese unterscheidet sich von der ersten Ausführungsform lediglich durch die Gestaltung der Nockenwelle, oder alternativ dadurch, dass jeweils mehrere Hebesegmente 11 zu einem Hebeelement gruppiert sind. Dies kann entweder dadurch bewirkt werden, dass mehrere Hebesegmente 11 miteinander verbunden sind, so dass sie nur synchron angehoben werden können, oder dadurch, dass die Nockenwelle bereichsweise für Hebesegmente 11 das gleiche Nockenprofil bereitstellt. Im Resultat bewirkt jede dieser Anpassungen aber das gleiche Ergebnis, nämlich dass die zu Hebeelementen gruppierten Hebesegmente 11 nur zeitgleich angehoben werden können, so dass ein halbseitiges Anheben der Produkte 3, 4, 5, 6 vermieden werden kann. Die Hebeelemente sind insbesondere jeweils an die jeweilige Produktbreite der einzelnen Produkte 3, 4, 5, 6 angepasst. Weiterhin unterscheidet sich die zweite Ausführungsform in ihrer Funktion bezüglich des Ausrichtens der Produkte von der ersten Ausführungsform.

In Figur 3a sind mehrere Produkte 3, 4, 5, 6 in einem unausgerichteten Zustand auf dem Produktförderer 1 angeordnet, wobei der relative Versatz zwischen den Produkten 3, 4, 5, 6 bereits mit der Lichtschranke 16 erfasst wurde. In einem ersten Schritt, dargestellt in Figur 3b, wird nun das Produkt 3 angehoben. Da die Hebesegmente 11, die dem Produkt 3 zugeordnet sind, ein synchronisiertes Hebeelement bilden, kann der Produktförderer 1 während des Anhebvorgangs weiterlaufen. In entsprechender Weise werden nun die Hebesegmente 11, die jeweils den Produkten 4, 5, 6 zugeordnet sind, nacheinander durch Verdrehen der Nockenwelle 15 angehoben, so dass die erfindungsgemäße Vorrichtung über den in Figur 3c dargestellten Zustand in den in Figur 3d dargestellten Zustand übergeht, in dem alle Produkte 3, 4, 5, 6 im angehobenen Zustand sind. Die Nockenwelle kann derart angetrieben werden, dass der relative Versatz zwischen den einzelnen Produkten 3, 4, 5, 6 eindeutig definiert, beziehungsweise gleichmäßig ist. Dies kann insbesondere dadurch geschehen, dass das Anheben von ursprünglich weiter hinten liegenden Produkten verzögert wird, während ein Anheben von weiter vorne liegenden Produkten zügiger durchgeführt wird. Allerdings wird darauf hingewiesen, dass die Ausrichtung der Produkte 3, 4, 5, 6 auch ausschließlich beim Absenken der Produkte erfolgen kann.

Dann wird, wie in Figur 3e gezeigt, zunächst das Produkt 3 abgesenkt, wobei auch hier das Fördermittel beständig weiterläuft. In dem Moment, in dem das Produkt 3 in Längsrichtung L auf Höhe des Produktes 4 ist, wird auch das Produkt 4 abgesenkt. Der Zustand im Moment des Absenkens des Produktes 4 ist in Figur 3e dargestellt. Dann werden weiterhin die Produkte 5 und 6 abgesenkt, bis alle Produkte 3, 4, 5, 6 in einem ausgerichteten Zustand, wie in Figur 3f dargestellt, vorliegen, in dem das Produkt 6 kurz vor dessen Absenken dargestellt ist.

Dadurch, dass die jeweiligen Hebesegmente 11 pro Produkt zu Hebeementen gruppiert sind, kann ein beständiges Fortlaufen des Produktförderers 1 während des Ausrichtens ermöglicht werden, so dass der Ausrichtvorgang insgesamt beschleunigt werden kann. Die Hebesegmente können manuell oder automatisch entsprechend der Produktbreite zu Hebeelementen gruppiert werden.

Das Verfahren gemäß der zweiten Ausführungsform wird im Folgenden zusammengefasst. Zunächst werden mehrere Produkte 3, 4, 5 mit relativem Versatz in Förderrichtung, das heißt Längsrichtung L, zueinander von einem davor geschalteten Fördermittel, insbesondere einem Transportband, auf den Produktförderer 1 übergeben. Der Versatz wird insbesondere durch optische Sensorik, beispielsweise die Lichtschranke 16, erfasst. Sobald sich das außenliegende Produkt 3 komplett über den Hebesegmenten 11 befindet, werden die gruppierten Hebesegmente 11, die dem Produkt 3 zugeordnet sind, durch Drehung der Nockenwelle 15 aus der Ebene der Förderriemen 2 ausgehoben, während die Förderriemen 2 die verbleibenden Produkte 4, 5, 6 weiter fördern. Wenn das benachbarte Produkt 4 einen definierten Abstand zum zuvor angehobenen Produkt 3 erreicht, wird auch dieses angehoben. Dieser Vorgang wird so lange durchgeführt, bis alle Produkte 3, 4 zum jeweils benachbarten den gleichen oder zumindest einen definierten Abstand haben und über den Produktförderer 1 angehoben wurden. Nachdem das letzte Produkt 6 angehoben wurde, wird das erste Produkt 3 wieder auf die laufenden Förderriemen 2 abgesenkt. Erreicht das auf den Förderriemen 2 befindliche Produkt die Höhe des benachbarten Produktes 4, wird auch dieses auf die laufenden Förderriemen 2 abgesenkt, und die beiden so ausgerichteten Produkte 3, 4 werden weiter transportiert. Dieser Vorgang wird so lange fortgeführt, bis alle Produkte zueinander ausgerichtet sind. Danach kann sofort die nächste Gruppe an Produkten 3, 4, 5, 6 auf den Produktförderer 1 übernommen werden.

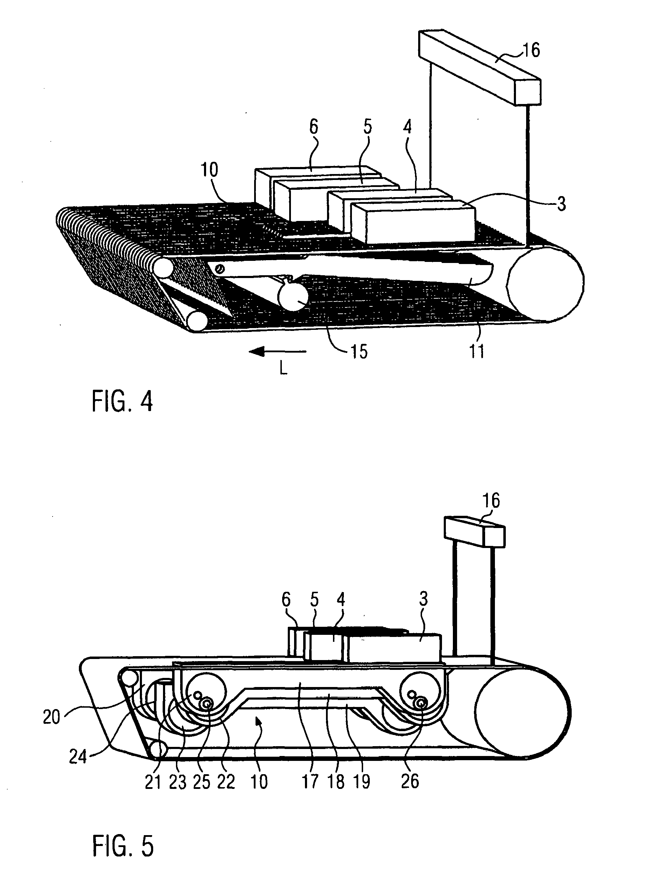

Figur 4 zeigt eine dritte Ausführungsform der erfindungsgemäßen Vorrichtung, wobei im Unterschied zur zweiten Ausführungsform lediglich eine andere Anhebereihenfolge der einzelnen Hebeelemente in Form von gruppierten Hebesegmenten 11 vorliegt. Die Gruppierung der Hebesegmente 11 kann wiederum durch mechanische Verbindung der Hebesegmente 11 selbst, oder durch eine entsprechende Ausgestaltung der Nockenwelle 15 erfolgen. Auch in der dritten Ausführungsform kann wenigstens teilweise ein Weiterlaufen des Produktförderers 1 während des Ausrichtvorgangs erfolgen. Wiederum werden in der dritten Ausführungsform mehrere Produkte 3, 4, 5, 6 mit relativem Versatz in Transportrichtung, das heißt in Längsrichtung L auf den Produktförderer 1 übergeben, nämlich insbesondere von einem davorgeschalteten Fördermittel, vornehmlich in Form eines Transportbandes. Der Versatz zwischen den einzelnen Produkten 3, 4, 5, 6 wird durch optische Sensorik, insbesondere durch die Lichtschranke 16, erfasst. Sobald sich die außenliegende Portion 3 komplett über den Hebesegmenten 11 befindet, wird diese durch Drehung der Nockenwelle 15 aus der Transportebene der Förderriemen 2 angehoben, während der Produktförderer 1 die übrigen Produkte 4, 5, 6 weiterfördert. Wenn das benachbarte Produkt 4 einen definierten Abstand zum zuvor angehobenen Produkt 3 erreicht, wird das Produkt 3 wieder abgesetzt und unmittelbar danach das benachbarte Produkt 4 angehoben. Durch den Weitertransport wird das abgesetzte Produkt 3 zum angehobenen Produkt 4 ausgerichtet, wie in Figur 4 dargestellt. Befinden sich die beiden Produkte 3, 4 auf gleicher Höhe, wird das angehobene Produkt 4 wieder abgesetzt und das nächste benachbarte Produkt 5 angehoben. Dieser Vorgang wird so lange fortgeführt, bis alle Produkte zum jeweils benachbarten Produkt ausgerichtet sind. Wenn das letzte Produkt 6 abgesenkt wurde, kann bereits ein erstes Produkt einer folgenden Produktzeile, das heißt einer Produktgruppe mit Produkten 3, 4, 5, 6, angehoben werden. Dadurch wird ein wesentlicher Leistungsvorteil erzielt.

Das Verfahren gemäß der dritten Ausführungsform der Erfindung kann auch mit der vierten Ausführungsform der Erfindung wie in Figur 5 dargestellt, durchgeführt werden. In der vierten Ausführungsform gemäß Figur 5 umfasst das Hebemittel vier Hebeelemente 17, 18, 19, 20, die jeweils auf einem Exzenterabschnitt 21, 22, 23, 24 einer Exzenterwelle 25 vorgesehen sind. Eine zweite entsprechende Exzenterwelle 26 kann vorgesehen sein, ist aber optional, da sich das gleiche Ergebnis auch durch entsprechende Führung oder Lagerung der Hebeelemente 17, 18, 19, 20 erreichen lässt. Wenn die Exzenterwelle 25, und optional die Exzenterwelle 26, verdreht werden, werden die Hebeelemente 17, 18, 19, 20 der Reihe nach einzeln angehoben, so dass die Produkte 3, 4, 5, 6 der Reihe nach angehoben werden können und somit aus dem Eingriff mit dem Produktförderer, insbesondere den Förderriemen 2, gebracht werden können. Somit kann das Verfahren zum Ausrichten von Produkten gemäß der dritten Ausführungsform durchgeführt werden. Die Hebeelemente 17, 18, 19, 20 umfassen jeweils mehrere Vorsprünge, die zwischen den Förderriemen 2 durchgreifen können, um mit den Produkten 3, 4, 5, 6 in Eingriff zu kommen. Insbesondere können die Hebeelemente 17, 18, 19, 20 durch mehrere aneinander befestigte, beabstandete Platten ausgebildet sein.

Ausrichten im Sinne der vorliegenden Erfindung bedeutet insbesondere, dass die stromabwärts in Förderrichtung, das heißt in Längsrichtung L, angeordneten Endseiten der Produkte 3, 4 auf gleiche Höhe in Längsrichtung L gebracht werden. Allerdings bedeutet Ausrichten im Sinne der vorliegenden Erfindung aber nicht nur, dass die Produkte auf gleiche Höhe in Längsrichtung gebracht werden, sondern auch alternativ, dass ein vorbestimmter Abstand zwischen den Produkten in Längsrichtung eingestellt wird.

Es wird betont, dass es in allen Ausführungsformen auch möglich ist, dass ein Produkt nicht angehoben wird, oder sogar gar kein Hebemittel für dieses Produkt vorgesehen ist, da eine Ausrichtung einer gesamten Produktzeile auch möglich ist, wenn alle bis auf ein Produkt angehoben werden.

Zusammenfassend ist zu erwähnen, dass mit der ersten Ausführungsform der Vorrichtung der flexibelste Aufbau geschaffen werden kann, da bei einem Wechsel der Produkte, insbesondere einem Wechsel der Produkte hin zu Produkten mit unterschiedlichen Produktbreiten, weder Umbau noch Einstellungen erforderlich sind, sondern lediglich die Ansteuerung der Nockenwelle 15 angepasst werden muss.

Dagegen sind die zweiten, dritten und vierten Ausführungsformen der erfindungsgemäßen Vorrichtung etwas aufwändiger, und erfordern insbesondere Einstellarbeiten durch den Bediener bezüglich des Austauschs von Nockenwellen oder der Befestigung der Hebesegmente aneinander. Dabei kann aber eine höhere Leistung erreicht werden, da der Produktförderer nicht angehalten werden muss, da ein Schiefstellen der Produkte durch das gleichzeitige Anheben der verschiedenen Hebesegmente 11, oder durch die integral ausgeführten Hebeelemente 17, 18, 19, 20 nicht auftreten kann.

Die höchste Leistung wird allerdings mit den dritten oder vierten Ausführungsformen erreicht, da die einzelnen Produkte jeweils nur kurz angehoben werden und ausgerichtet werden, und des Weiteren die nächsten Produkte bereits angehoben werden können, sobald das letzte Produkt des vorherigen Produktsatzes abgesetzt wurde.

## Patentansprüche

1. Vorrichtung zum Ausrichten von mehreren Produkten (3, 4, 5, 6), insbesondere Lebensmittelprodukten, mit
einem Produktförderer (1) auf dem in Breitenrichtung (B) mehrere Produkte (3, 4, 5, 6) nebeneinander anordbar sind, und
einem Hebemittel (10), das ausgelegt ist, wenigstens ein einzelnes Produkt (3, 4, 5, 6) anzuheben und abzusenken, wobei der Produktförderer (1) im Eingriff mit Produkten (3, 4, 5, 6) im abgesenkten Zustand ist, und der Produktförderer (1) nicht im Eingriff mit Produkten (3, 4, 5, 6) im angehobenen Zustand ist, wobei das Hebemittel (10) Hebeelemente (17, 18, 19, 20) umfasst, und das Hebemittel (10) ausgelegt ist, das wenigstens eine Produkt (3, 4, 5, 6) so anzuheben oder abzusenken, dass durch Verschieben wenigstens eines Produktes (3, 4, 5, 6) im abgesenkten Zustand durch den Produktförderer (1), die Produkte (3, 4, 5, 6) relativ zueinander in Förderrichtung des Produktförderers (1) ausgerichtet werden können
**dadurch gekennzeichnet, dass**
ein Ansteuerungsmechanismus für die Hebeelemente (17, 18, 19, 20) eine Exzenterwelle (25, 26) umfasst, auf der die Hebeelemente (17, 18, 19, 20) angeordnet sind.

2. Vorrichtung nach Anspruch 1, wobei ein Positionssensor (16) vorgesehen ist, der ausgelegt ist, die Position der Produkte (3, 4, 5, 6) in Längsrichtung zu bestimmen.

3. Vorrichtung nach Anspruch 1 oder 2, wobei der Produktförderer (1) aus mehreren parallelen Förderriemen (2) besteht, die synchron angetrieben werden, und wobei das Hebemittel (10) ausgelegt ist, im angehobenen Zustand durch die Zwischenräume zwischen den Förderriemen (2) von unten durchzugreifen.

4. Vorrichtung nach einem der vorangehenden Ansprüche, wobei die Hebeelemente (17, 18, 19, 20) jeweils mehrere Hebesegmente (11) umfassen, die ausgelegt sind, synchron angehoben und abgesenkt zu werden, und wobei die Hebeelemente (17, 18, 19, 20) ausgelegt sind, dass ein Produkt (3, 4, 5, 6) jeweils mit nur einem Hebeelement (17, 18, 19, 20) in Eingriff kommt.

5. Vorrichtung nach Anspruch 4, wobei die Hebesegmente (11) eines Hebeelements (17, 18, 19, 20) miteinander verbunden sind, sodass sie ihre Bewegung synchronisiert ist.

6. Vorrichtung nach einem der Ansprüche 4 oder 5, wobei der Ansteuerungsmechanismus nur einen Stellantrieb, insbesondere einen Servomotor oder Schrittmotor, aufweist.

7. Verfahren zum Ausrichten von mehreren Produkten (3, 4, 5, 6), insbesondere Lebensmittelprodukten, mit den folgenden Schritten:
i) Anordnen von mehreren Produkten (3, 4, 5, 6) in Breitenrichtung (B) eines Produktförderers (1),
ii) Fördern der mehreren Produkte in Längsrichtung (L) des Produktförderers (1),
iii) Anheben wenigstens eines Produktes (3, 4, 5, 6) durch ein Hebemittel (10), sodass es nicht mehr im Eingriff mit dem Produktförderer (1) ist, wobei
das Hebemittel (10) Hebeelemente (17, 18, 19, 20) umfasst, und wobei ein Ansteuerungsmechanismus für die Hebeelemente (17, 18, 19, 20) eine Exzenterwelle (25, 26) umfasst, auf der die Hebeelemente (17, 18, 19, 20) angeordnet sind,
iv) Fördern wenigstens eines verbleibenden Produktes (3, 4, 5, 6) auf dem Produktförderer (1) in Längsrichtung (L) oder Gegenlängsrichtung, sodass es mit einem angehobenen Produkt (3, 4, 5, 6) ausgerichtet wird, und
v) Absenken des wenigstens einen angehobenen Produktes (3, 4, 5, 6).

8. Verfahren nach Anspruch 7, wobei die Position der Produkte (3, 4, 5, 6) in Längsrichtung (L) in Schritt i) oder ii) bestimmt wird, und als Grundlage für die Ausrichtung verwendet wird.

9. Verfahren nach Anspruch 7, wobei in Schritt iv) die Position wenigstens eines verbleibenden Produktes (3, 4, 5, 6) in Längsrichtung (L) auf dem Produktförderer (1) bestimmt wird.

10. Verfahren nach einem der Ansprüche 7 bis 9, wobei bei Schritt iii) jeweils ein Produkt (3, 4, 5, 6) angehoben wird, und die Schritte iii) und iv) wiederholt werden, bis die Produkte (3, 4, 5, 6) ausgerichtet sind, und daraufhin die angehobenen Produkte (3, 4, 5, 6) in Schritt v) abgesenkt werden.

11. Verfahren nach einem der Ansprüche 7 bis 9, wobei durch Wiederholung von Schritt iii) mehrere Produkte (3, 4, 5, 6) nacheinander angehoben werden, und bei Schritt v) jeweils ein Produkt (3, 4, 5, 6) abgesenkt wird, und die Schritte iv) bis v) wiederholt werden, bis die Produkte (3, 4, 5, 6) ausgerichtet sind.

12. Verfahren nach einem der Ansprüche 7 bis 9, wobei bei Schritt iii) jeweils ein Produkt (3, 4, 5, 6) angehoben wird, und in Schritt v) das angehobene Produkt (3, 4, 5, 6) abgesenkt wird, und die Schritte iii) bis v) wiederholt werden, bis alle Produkte (3, 4, 5, 6) ausgerichtet sind.

13. Verfahren nach einem der Ansprüche 7 bis 12, wobei der Produktförderer (1) in den Schritten iii) und v) die auf ihm liegenden bzw. verbleibenden Produkte (3, 4, 5, 6) fördert.

## Claims

1. Device for aligning a plurality of products (3, 4, 5, 6), in particular food products, comprising a product conveyor (1) on which a plurality of products (3, 4, 5, 6) can be arranged next to one another in the width direction (B), and
a lifting means (10) which is designed to lift and to lower at least one individual product (3, 4, 5, 6), wherein the product conveyor (1) is in engagement with products (3, 4, 5, 6) in the lowered state, and the product conveyor (1) is not in engagement with products (3, 4, 5, 6) in the lifted state, wherein the lifting means (10) comprises lifting elements (17, 18, 19, 20), and the lifting means (10) is designed to lift or to lower the at least one product (3, 4, 5, 6) in such a way that, by displacement of at least one product (3, 4, 5, 6) in the lowered state by the product conveyor (1), the products (3, 4, 5, 6) can be aligned relative to one another in the conveying direction of the product conveyor (1),
**characterized in that**
an actuating mechanism for the lifting elements (17, 18, 19, 20) comprises an eccentric shaft (25, 26) on which the lifting elements (17, 18, 19, 20) are arranged.

2. Device according to claim 1, wherein a position sensor (16) is provided which is designed to determine the position of the products (3, 4, 5, 6) in the longitudinal direction.

3. Device according to claim 1 or 2, wherein the product conveyor (1) consists of a plurality of parallel conveyor belts (2) which are driven in a synchronous manner, and wherein the lifting means (10) is designed to in the lifted state penetrate through the intermediate spaces between the conveyor belts (2) from below.

4. Device according to any one of the preceding claims, wherein the lifting elements (17, 18, 19, 20) each comprise a plurality of lifting segments (11) which are designed to be lifted and lowered in a synchronous manner, and wherein the lifting elements (17, 18, 19, 20) are designed in such a way that a product (3, 4, 5, 6) in each case comes into engagement with just one lifting element (17, 18, 19, 20).

5. Device according to claim 4, wherein the lifting segments (11) of a lifting element (17, 18, 19, 20) are connected to one another so that their movement is synchronized.

6. Device according to any one of claims 4 or 5, wherein the actuating mechanism comprises just one actuator, in particular a servo motor or stepper motor.

7. Method for aligning a plurality of products (3, 4, 5, 6), in particular food products, comprising the following steps:
i) arranging a plurality of products (3, 4, 5, 6) in the width direction (B) of a product conveyor (1),
ii) conveying the plurality of products in the longitudinal direction (L) of the product conveyor (1),
iii) lifting at least one product (3, 4, 5, 6) by a lifting means (10) so that said product is no longer in engagement with the product conveyor (1), wherein
the lifting means (10) comprises lifting elements (17, 18, 19, 20), and wherein
an actuating mechanism for the lifting elements (17, 18, 19, 20) comprises an eccentric shaft (25, 26) on which the lifting elements (17, 18, 19, 20) are arranged,
iv) conveying at least one remaining product (3, 4, 5, 6) on the product conveyor (1) in the longitudinal direction (L) or counter-longitudinal direction, so that it is aligned with a lifted product (3, 4, 5, 6), and
v) lowering the at least one lifted product (3, 4, 5, 6).

8. Method according to claim 7, wherein the position of the products (3, 4, 5, 6) in the longitudinal direction (L) is determined in step i) or ii) and is used as a basis for the alignment.

9. Method according to claim 7, wherein in step iv) the position of at least one remaining product (3, 4, 5, 6) in the longitudinal direction (L) on the product conveyor (1) is determined.

10. Method according to any one of claims 7 to 9, wherein in step iii) in each case one product (3, 4, 5, 6) is lifted, and steps iii) and iv) are repeated until the products (3, 4, 5, 6) are aligned, and then the lifted products (3, 4, 5, 6) are lowered in step v).

11. Method according to any one of claims 7 to 9, wherein by repeating step iii) a plurality of products (3, 4, 5, 6) are lifted one after the other, and in step v) in each case one product (3, 4, 5, 6) is lowered, and steps iv) to v) are repeated until the products (3, 4, 5, 6) are aligned.

12. Method according to any one of claims 7 to 9, wherein in step iii) in each case one product (3, 4, 5, 6) is lifted, and in step v) the lifted product (3, 4, 5, 6) is lowered, and steps iii) to v) are repeated until all the products (3, 4, 5, 6) are aligned.

13. Method according to any one of claims 7 to 12, wherein the product conveyor (1) in steps iii) and v) conveys the products (3, 4, 5, 6) resting or remaining thereon.

## Revendications

1. Dispositif d'alignement d'une pluralité de produits (3, 4, 5, 6), en particulier de produits alimentaires, comprenant
un convoyeur de produits (1) sur lequel une pluralité de produits (3, 4, 5, 6) peuvent être agencés les uns à côté des autres en direction de la largeur (B), et
un moyen de levage (10) agencé pour lever et abaisser au moins un produit individuel (3, 4, 5, 6), dans lequel le convoyeur de produits (1) est en prise avec des produits (3, 4, 5, 6) en position abaissée, et le convoyeur de produits (1) n'est pas en prise avec des produits (3, 4, 5, 6) en position levée, dans lequel le moyen de levage (10) comporte des éléments de levage (17, 18, 19, 20), et le moyen de levage (10) est agencé pour lever ou abaisser le au moins un produit (3, 4, 5, 6) de telle sorte que les produits (3, 4, 5, 6) peuvent être alignés les uns par rapport aux autres en direction d'alimentation du convoyeur de produits (1) par le déplacement d'au moins un produit (3, 4, 5, 6) en position abaissée par le convoyeur de produits (1),
**caractérisé**
**en ce qu'**un mécanisme de commande pour les éléments de levage (17, 18, 19, 20) comporte un axe excentrique (25, 26) sur lequel sont agencés les éléments de levage (17, 18, 19, 20).

2. Dispositif selon la revendication 1, dans lequel est pourvu un capteur de position (16) qui est agencé pour déterminer la position des produits (3, 4, 5, 6) en direction longitudinale.

3. Dispositif selon la revendication 1 ou 2, dans lequel le convoyeur de produits (1) consiste en plusieurs courroies d'alimentation parallèles (2) qui sont entraînées de manière synchrone, et dans lequel le moyen de levage (10) en position levée est conformé à saisir par le bas, à travers les intervalles présents entre les courroies d'alimentation (2).

4. Dispositif selon l'une des revendications précédentes, dans lequel les éléments de levage (17, 18, 19, 20) comportent chacun plusieurs segments de levage (11) qui sont agencés pour être levés et abaissés de manière synchrone, et dans lequel les éléments de levage (17, 18, 19, 20) sont agencés de manière à ce qu'un produit (3, 4, 5, 6) soit toujours en prise avec un seul élément de levage (17, 18, 19, 20).

5. Dispositif selon la revendication 4, dans lequel les segments de levage (11) d'un élément de levage (17, 18, 19, 20) sont reliés entre eux de telle sorte que leurs déplacements sont synchronisés.

6. Dispositif selon l'une des revendications 4 et 5, dans lequel le mécanisme de commande ne comporte qu'un actionneur, en particulier un servomoteur ou un moteur pas-à-pas.

7. Procédé d'alignement d'une pluralité de produits (3, 4, 5, 6), en particulier de produits alimentaires, comprenant les étapes suivantes :
i) agencement d'une pluralité de produits (3, 4, 5, 6) en direction de la largeur (B) d'un convoyeur de produits (1),
ii) alimentation de la pluralité de produits en direction longitudinale (L) du convoyeur de produits (1),
iii) levage d'au moins un produit (3, 4, 5 , 6) par un moyen de levage (10) de telle sorte qu'il ne soit plus en prise avec le convoyeur de produits (1), dans lequel
le moyen de levage (10) comporte des éléments de levage (17, 18, 19, 20), et dans lequel
un mécanisme de commande pour les éléments de levage (17, 18, 19, 20) comporte un axe excentrique (25, 26) sur lequel les éléments de levage (17, 18, 19, 20) sont agencés,
iv) alimentation d'au moins un produit restant (3, 4, 5, 6) sur le convoyeur de produits (1) en direction longitudinale (L) ou en direction longitudinale inverse, de telle sorte qu'il soit aligné avec un produit levé (3, 4, 5, 6), et
v) abaissement dudit au moins un produit levé (3, 4, 5, 6).

8. Procédé selon la revendication 7, dans lequel la position des produits (3, 4, 5, 6) en direction longitudinale (L) est déterminée à l'étape i) ou ii) et sert de base à l'alignement.

9. Procédé selon la revendication 7, dans lequel à l'étape iv), la position dudit au moins un produit restant (3, 4, 5, 6) est déterminée en direction longitudinale (L) sur le convoyeur de produits (1).

10. Procédé selon l'une des revendications 7 à 9, dans lequel un produit (3, 4, 5, 6) est chaque fois levé à l'étape iii), et les étapes iii) et iv) sont répétées jusqu'à ce que les produits (3, 4, 5, 6) soient alignés, suite à quoi les produits levés (3, 4, 5, 6) à l'étape v) sont abaissés.

11. Procédé selon l'une des revendications 7 à 9, dans lequel plusieurs produits (3, 4, 5, 6) sont levés l'un après l'autre par répétition de l'étape iii), un produit (3, 4, 5, 6) est à chaque fois abaissé à l'étape v), et les étapes iv) à v) sont répétées jusqu'à ce que les produits (3, 4, 5, 6) soient alignés.

12. Procédé selon l'une des revendications 7 à 9, dans lequel un produit (3, 4, 5, 6) est chaque fois levé à l'étape iii), le produit levé (3, 4, 5, 6) est abaissé à l'étape v), et les étapes iii) à v) sont répétées jusqu'à ce que tous les produits (3, 4, 5, 6) soient alignés.

13. Procédé selon l'une des revendications 7 à 12, dans lequel, aux étapes iii) et v), le convoyeur de produits (1) alimente les produits qui s'y trouvent et restants (3, 4, 5, 6).
